# EUROPÄISCHE PATENTANMELDUNG

(11) **EP 1 002 901 A2**
(43) Veröffentlichungstag der Anmeldung: **24.05.2000**
(21) Anmeldenummer: 99250409.2
(22) Anmeldetag: 19.11.1999
(51) Int. Cl.: E01C 9/00

(54) **Rasengitterplatte**

(30) Priorität: 20.11.1998 DE 19855007
(71) Anmelder: Heitsch, Brigitte, 14778 Jeserig (DE)
(72) Erfinder: Heitsch, Brigitte, 14778 Jeserig (DE)
(74) Vertreter: Heitsch, Wolfgang

(57) **Zusammenfassung**

Üblicherweise werden Parkanlagen, Grünflächen in Hausgärten und sonstige nicht regelmäßig zu befahrende Grünflächen nicht mit Rasengitterplatten (1) befestigt. Werden in diesen Flächen Baumscheiben für Neupflanzungen von Bäumen angelegt, oder grenzen diese Grünflächen an Pflanzbeete an, so werden die Kanten der an diese Pflanzbereiche angrenzenden Rasenflächen durch Betreten und Befahren mit Rasenmähern niedergedrückt, und Gräser, insbesondere Quecken, wachsen in die Pflanzbereiche. Um die einmal abgestochenen Kanten zu erhalten und das Überwuchern von Gräsern und Unkräutern in die Pflanzbereiche zu verhindern, wird erfindungsgemäß eine Rasengitterplatte (1) vorgeschlagen, die einen an einer zum Pflanzbeet weisenden Seite etwa senkrecht zur Rasengitterplatte verlaufenden Schild (5) aufweist, welches in seiner senkrechten Ausdehnung ein Vielfaches der Höhe der Rasengitterplatte (1) ausmacht und keinerlei Durchbrüche aufweist. An den übrigen Seiten der Rasengitterplatte angeordnete Verschlüsse verbinden benachbarte Rasengitterplatten.
An diesen mit einem Schild (5) versehenen Rasengitterplatten, welche entlang von Pflanzbeeten und um Baumscheiben herum verlegt sind, können sich je nach Nutzung der jeweiligen Grünfläche weitere Rasengitterplatten im Verbund anschließen.

## Beschreibung

Die Erfindung betrifft eine Rasengitterplatte, insbesondere für die Abdeckung von an Baumscheiben angrenzenden Grünflächen nach dem Oberbegriff des Anspruchs 1.

Es sind Rasengitterplatten als Mittel zur Befestigung von begehbaren und befahrbaren Grünflächen bekannt. Diese Rasengitterplatten sind meist als einstückige Kunststoffspritzgußteile, die aus einer Vielzahl von Waben bestehen, in Draufsicht eine etwa rechteckige Form aufweisen und nach Verlegung mittels der an ihrer Peripherie angeordneten Verschlüsse untereinander verbindbar sind, gestaltet. Durch eine Vielzahl zusammengefügter derartiger Platten erfolgt die Befestigung von Grünflächen beliebiger Größen.

Unter den bekannten Rasengitterplatten sind auch solche, die für bestimmte Zwecke vorgesehen sind bzw. Elemente besitzen, welche besondere Aufgaben erfüllen.

In der DE-OS 44 15 594 A1 wird ein Rasengitterplattenbausatz beschrieben, der insbesondere zur Befestigung der Grasnarbe von Parkplätzen, Zufahrten sowie allgemein stark beanspruchten Rasenflächen bzw. von Fahrspuren dient. Dieser Bausatz enthält eine Rasengitterplatte mit am Rand angeordneter Schwelle, die das Überfahren durch Fahrzeuge verhindern soll. Eine derartige Platte dient dem Schutz von Bepflanzungen und Bauwerken.
In gleicher DE-OS wird eine Rasengitterplatte mit querverlaufender Rinne beschrieben, welche bei starken Regengüssen ein sofortiges Abfließen von Oberflächenwasser ermöglichen soll.
Zu diesem Rasengitterplattenbausatz gehört auch eine weitere Platte von keilförmiger Gestalt. Diese findet insbesondere Verwendung beim Verlegen von Rasengitterplatten auf bereits festem Untergrund und dient dem besseren Auffahren von Fahrzeugen auf schon im Verbund verlegte Rasengitterplatten und verhindert damit das Zerbrechen von Randteilen der Platten.

In der DE-OS 44 39 937 A1 wird eine Bodenbefestigungsplatte mit Bodenhaftzapfen beschrieben.
Steckfüße, wie sie in der DE-OS 195 40 538 dargestellt sind, dienen wie die zuvor genannten Bodenhaftzapfen ebenfalls der Verankerung im Untergrund. Derartige Rasengitterplatten finden zumeist Anwendung an Böschungen.

In der DE-OS 33 27 868 wird eine Rasenabdeckung für Straßenbankette mit Ausnehmung für eine Straßenleiteinrichtung beschrieben. Es handelt sich dabei um eine Ausnehmung, die lediglich eine Öffnung zur senkrechten Aufnahme von einer Straßenleiteinrichtung darstellt.

Nachteil aller bekannten Rasengitterplatten ist, daß an den Rändern von im Verbund verlegten Platten, insbesondere bei Platten, die seitliche Durchwurzelungslöcher aufweisen, Gräser, vornehmlich auch Quecken (Agropyron repens), und Unkräuter in benachbarte Bepflanzungen - so auch in Baumscheiben - hinüberwachsen.
Auch bei nicht mit Rasengitterplatten befestigten Grünflächen ist es lästig und erfordert erheblichen Aufwand zu deren Beseitigung, wenn aus einer Grünfläche Quecken in Baumscheiben und Pflanzbeete hinüberwachsen. So müssen - wenn diese Pflanzbeete gepflegt aussehen sollen - die Ränder von Grünflächen regelmäßig abgestochen werden.

Aufgabe der Erfindung ist es daher, eine Rasengitterplatte zu entwickeln, die für die Befestigung von an Pflanzbeeten und Baumseheiben angrenzenden Teilen bzw. Abschnitten von Grünflächen geeignet ist, die Gras- und Unkrautüberwucherung in Baumscheiben und Pflanzbeete begrenzt.

Üblicherweise werden Parkanlagen, Grünflächen in Hausgärten und sonstige nicht regelmäßig zu befahrende Grünflächen nicht mit Rasengitterplatten befestigt. Werden in diesen Flächen Baumseheiben für Neupflanzungen von Bäumen angelegt, oder grenzen diese Grünflächen an Pflanzbeete an, so werden die Kanten der an diese Pflanzbereiche angrenzenden Rasenflächen durch Betreten und Befahren mit Rasenmähern niedergedrückt, und Gräser, insbesondere Quecken, wachsen in die Pflanzbereiche. Um die einmal abgestochenen Kanten zu erhalten und das Überwuchern von Gräsern und Unkräutern in die Pflanzbereiche zu verhindern, wird erfindungsgemäß eine Rasengitterplatte vorgeschlagen, die einen an einer zum Pflanzbeet weisenden Seite etwa senkrecht zur Rasengitterplatte verlaufenden Schild aufweist, welcher in seiner senkrechten Ausdehnung ein Vielfaches der Höhe der Rasengitterplatte ausmacht und keinerlei Durchbrüche aufweist. An den übrigen Seiten der Rasengitterplatte angeordnete Verschlüsse verbinden benachbarte Rasengitterplatten.
An diesen mit einem Schild versehenen Rasengitterplatten, welche entlang von Pflanzbeeten und um Baumscheiben herum verlegt sind, können sich je nach Nutzung der jeweiligen Grünfläche weitere Rasengitterplatten im Verbund anschließen.

Es liegt im Bereich der Erfindung, derartige Rasengitterplatten mit einer Öffnung zu versehen, die das Hindurchstecken von Haltepfählen für neugepflanzte Bäume ermöglicht.

Die Merkmale der Erfindung gehen außer aus den Ansprüchen auch aus der Beschreibung und den Zeichnungen hervor, wobei die einzelnen Merkmale jeweils für sich allein oder zu mehreren in Form von Unterkombinationen der Elemente vorteilhafte schutzfähige Ausführungen darstellen, für die mit dieser Schrift Schutz beantragt wird.

Die Erfindung soll im folgenden in drei Ausführungsbeispielen näher erläutert werden. Die Figuren zeigen:
- Fig. 1:: Draufsicht aufeinen Ausschnitt einer Rasengitterplatte
- Fig. 2:: Schnitt A-A nach Fig. 1 durch eine Rasengitterplatte mit Schild, im Erdreich verlegt
- Fig. 3:: Verlegeprinzip in Draufsicht von Rasengitterplatten von etwa dreieckförmiger Grundgestalt
- Fig. 4:: Verlegeprinzip in Draufsicht von Rasengitterplatten von etwa trapezförmiger Grundgestalt
- Fig. 5:: Schnitt durch eine Rasengitterplatte mit Schild und Schrägöffnung, im Erdreich verlegt

### Beispiel 1:

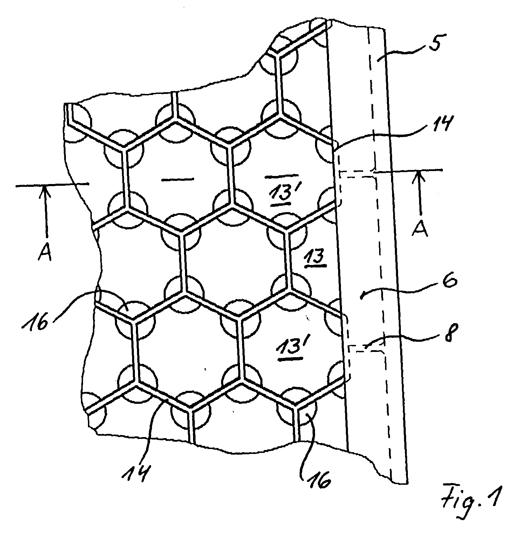

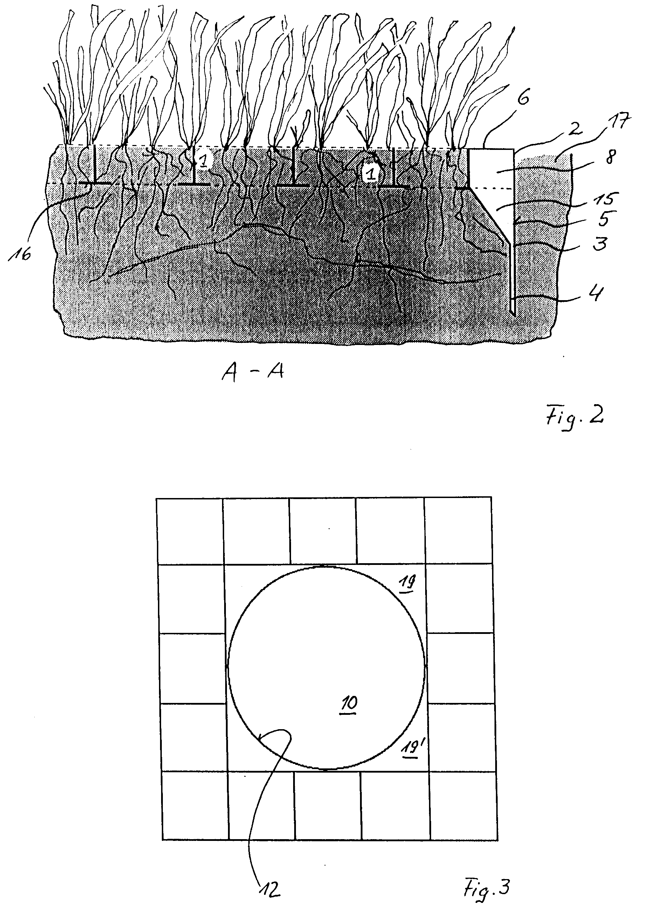

Fig. 1 stellt eine Draufsicht auf einen Ausschnitt einer Rasengitterplatte **1** und Fig. 2 einen Schnitt A-A nach Fig. 1 durch eine im Erdreich verlegte Rasengitterplatte **1** mit einem im Randbereich angeordneten durchbruchfreien Schild **5**, welches aus einem Mittelteil **3**, einem Oberteil **2** und einem Unterteil **4** besteht, dar. Eine sich horizontal an das Oberteil **2** anschließende Randleiste **6** verschließt etwa eine halbe Breite einer randseitigen Wabe **13** der Rasengitterplatte **1.** Eine etwa im rechten Winkel zum Schild **5** senkrecht verlaufende Wand **8,** die eine randseitige Wabe **13** begrenzt, verläuft nach unten über die Unterkante der Bodenauflagen **16** hinaus und geht über in eine Lamelle **15,** welche ebenfalls etwa rechtwinklig zum Schild **5** angeordnet ist und schräg auslaufend etwa im Mittelteil **3** des Schildes **5** endigt. Die Randleiste **6**, die Wand **8** und die Lamelle **15** dienen der Stabilität des Schildes **5.**

Randseitige Bodenauflagen oder flachumlaufende Ränder, wie sie üblicherweise an bekannten Rasengitterplatten zur Stabilisierung der Platte selbst und auch zur Aufnahme von Verschlußelementen angeordnet sind, sind aus fertigungstechnischen Gründen an der Seite der Rasengitterplatte **1**, an welcher der Schild **5** angeordnet ist, nicht vorgesehen. Die randseitige Stabilität der Rasengitterplatte **1** wird durch den Schild **5** gewährleistet. Der Schild **5** verläuft in seinem Unterteil **4** etwas angefast zu.
Es liegt im Bereich der Erfindung, die Randleiste **6** in ihrer horizontalen Ausdehnung, abstützend auf Wabenwände **14,** bis über die Wabe **13'** auszudehnen. Es wird damit ein positiver Effekt erzielt, indem unmittelbar im zum Pflanzenbeet **17** hin gewandten Randbereich der Rasengitterplatte **1** kein Rasen mehr aufwächst. Das unsaubere Überhängen von Gräsern entfällt, weil es wegen der auf der horizontal verbreiterten Randleiste **6** rollenden Laufräder des Rasenmähers ermöglicht wird, daß das Mähmesser den Rasen bis zum äußeren Randbereich der Rasengitterplatte **1** erfaßt.
Werden erfindungsgemäße Rasengitterplatten **1** mit Schild **5** entlang von Pflanzbeeten **17** oder um Baumseheiben **10** nachträglich verlegt, und größere flachverlaufende Wurzeln von Bäumen verhindern das Einstecken des Schildes **5** in den Boden, so wird unmittelbar in einem solchen Wurzelbereich der entsprechende Schild **5** abschnittsweise ausgeschnitten.

In diesem Beispiel wurden Rasengitterplatten **1** mit Schild **5** beschrieben, die eine rechteckige Grundform aufweisen. Mühelos können an derart mit Rasengitterplatten **1** befestigtem Randstreifen weitere Rasengitterplatten bekannter Bauart mit entsprechend korrespondierenden Randverschlußteilen angeschlossen werden.

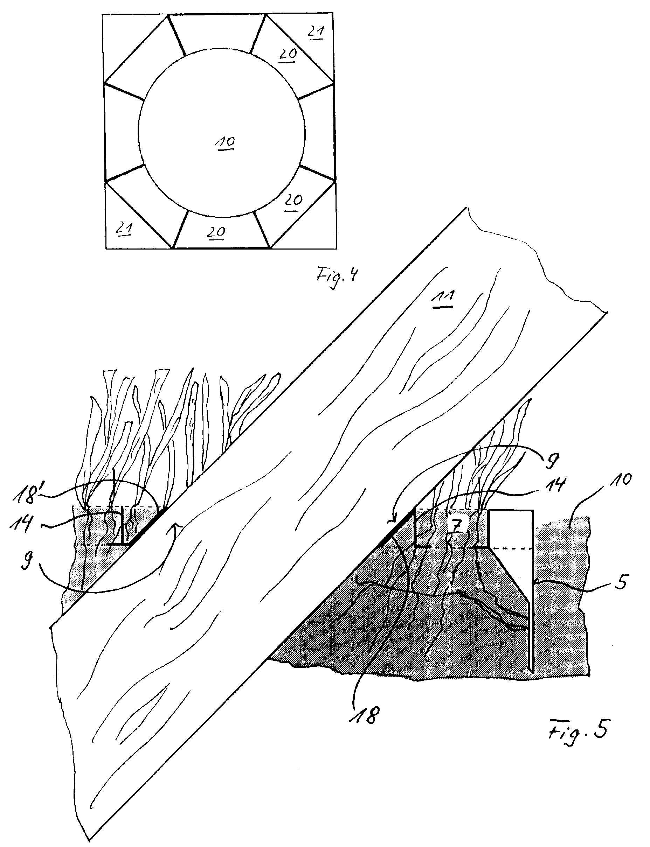

Es liegt im Bereich der Erfindung, eine wie in Fig. 3 dargestellte Rasengitterplatte **19** von etwa dreieckiger Grundform zu verwenden. Diese Rasengitterplatten haben eine kreisbogenförmig nach innen gewölbte, als Hypotenuse gedachte Seitenwand **12**, so daß sie beim Verlegen um eine kreisrunde Baumscheibe **10** mit ihren jeweiligen von der Baumscheibe **10** abgewandten Außenkanten in Draufsicht ein Quadrat ergeben. An den Außenkanten können dann in beliebiger Anzahl und nach allen Seiten hin Rasengitterplatten bekannter Bauart mit an den Rändern angeordneten, entsprechend korrespondierenden Verschlußelementen angebracht werden. Im Horizontalschnitt sind die Schilde **5** dieser etwa dreieckförmigen Rasengitterplatten **19** kreisbogenförmig nach innen gewölbt, wobei die spitzwinklig auslaufenden Seitenenden der Rasengitterplatte **19** entsprechend verstärkt und vorzugsweise mit Verschlußelementen zur benachbarten Rasengitterplatte **19'** versehen sind.

Auch liegt es im Bereich der Erfindung, um kreisrunde Baumscheiben **10** etwa trapezförmige Rasengitterplatten **20** anzuordnen, wie sie in Fig. 4 abgebildet sind, welche im Verbund verlegt um eine Baumscheibe ein Achteck bilden. Werden zwei Rasengitterplatten bekannter Bauart diagonal durchtrennt, kann mit diesen Dreiecken **21** aus durchtrennten Rasengitterplatten um eine kreisrunde Baumscheibe **10** ein Viereck gebildet werden, an welches wiederum zu allen Seiten hin im Verbund Rasengitterplatten bekannter Bauart verlegt werden können.

### Beispiel 2:

Die in Fig. 5 dargestellte Rasengitterplatte **7** unterscheidet sich von der Rasengitterplatte **1** im wesentlichen dadurch, daß diagonal durch die Rasengitterplatte **7** eine Schrägöffnung **9** verläuft. Die besondere Ausgestaltung der Rasengitterplatte **7** besteht in den zwischen den Wabenwänden **14** schräg verlaufenden, die Schrägöffnung **9** bildenden Stützwänden **18, 18'**. Die Schrägöffnung **9** dient der Aufnahme eines Pfahls **11** zur Halterung und Abstützung eines neugepflanzten Baums. Üblicherweise werden ein bis drei Pfähle zur Baumhalterung verwendet, so daß um eine Baumscheibe herum ein bis drei der Rasengitterplatten **7** dieses Typs anzuordnen sind.

### Beispiel 3:

Die in den Beispielen 1 und 2 beschriebenen Rasengitterplatten **1; 7; 19** und **20** sind erfindungsgemäß nach diesem Beispiel mit einem Schild **5** versehen, der versetzt vom Rand nach innen bzw. versetzt vom Oberteil **2** unterhalb von Waben **13'** und/oder Waben **13**, mit Bodenauflagen **16** und Wabenwänden **14** in Verbindung stehend, angeordnet ist.

## Patentansprüche

1. Rasengitterplatte, bestehend aus durch vertikale Wände gebildeten Waben mit Auflageflächen gegen das ungewollte Eindrücken in das Erdreich und zwischen diesen angeordneten Entwässerungsöffnungen, **dadurch gekennzeichnet,** daß etwa in einem rechten Winkel zur Verlegeebene einer Rasengitterplatte **(1; 7; 19; 20)** an mindestens einer Seite dieser randseitig eine nach unten in das Erdreich gerichtete plattenförmige Verlängerung angeordnet ist, die in ihrer vertikalen Ausdehnung größer ist als die Höhe von Wabenwänden **(14).**

2. Rasengitterplatte nach Anspruch 1, **dadurch gekennzeichnet,** daß die plattenförmige Verlängerung als Schild **(5)** mit geschlossener Fläche durchbruchsfrei ausgebildet ist.

3. Rasengitterplatte nach einem der Ansprüche 1 oder 2, **dadurch gekennzeichnet,** daß die als Schild **(5)** ausgebildete plattenförmige Verlängerung auf ihrer zur Rasengitterplatte **(1; 7; 19; 20)** hin weisenden Seite Versteifungen aufweist, die mit Wabenwänden **(14)** und/oder Bodenauflagen **(16)** der Rasengitterplatte **(1; 7; 19; 20)** in Verbindung stehen.

4. Rasengitterplatte nach Anspruch 3, **dadurch gekennzeichnet,** daß als mit dem Schild **(5)** in Verbindung stehende Versteifung eine Wand **(8)** zwischen Waben **(13, 13')** und dem Schild **(5)** angeordnet ist.

5. Rasengitterplatte nach Anspruch 3, **dadurch gekennzeichnet,** daß als mit dem Schild **(5)** in Verbindung stehende Versteifung eine Randleiste **(6),** welche etwa rechtwinklig zum Oberteil **(2)** des Schildes **(5)** verläuft, angeordnet ist.

6. Rasengitterplatte nach Anspruch 3, **dadurch gekennzeichnet,** daß als mit dem Schild **(5)** in Verbindung stehende Versteifung eine Lamelle **(15),** welche etwa schräg auslaufend bis zum Mittelteil **(3)** des Schildes **(5)** führend unterhalb der Wand **(8)** angeordnet ist.

7. Rasengitterplatte nach einem oder mehreren der vorangegangenen Ansprüche, **dadurch gekennzeichnet,** daß die Randleiste **(6)** mit den Oberkanten von Wänden **(14)** und/oder Oberkanten von Wänden **(8)** aufliegend verbunden ist.

8. Rasengitterplatte nach einem oder mehreren der vorangegangenen Ansprüche, **dadurch gekennzeichnet,** daß die Wände **(14)** und/oder die Wände **(8)** in nach unten in das Erdreich gerichtete Lamellen **(15)** übergehen und diese mit dem Schild **(5)** verbunden sind.

9. Rasengitterplatte nach einem oder mehreren der vorangegangenen Ansprüche, **dadurch gekennzeichnet,** daß die Randleiste **(6)** mindestens einen Teilbereich der Waben **(13)** und/oder der Waben **(13')** überdeckt.

10. Rasengitterplatte nach einem oder mehreren der vorangegangenen Ansprüche, **dadurch gekennzeichnet,** daß der Schild **(5)** an etwa rechteckförmigen Rasengitterplatten **(1; 7)** oder an etwa dreieckförmigen Rasengitterplatten **(19)** oder an etwa trapezförmigen Rasengitterplatten **(20)** angeordnet ist.

11. Rasengitterplatte nach einem oder mehreren der vorangegangenen Ansprüche, **dadurch gekennzeichnet,** daß die zur Baumscheibe **(10)** oder dem Pflanzbeet **(17)** hin weisende Seitenwand **(12)** der etwa dreieckförmigen Rasengitterplatte **(19)** in ihrer horizontalen Ausdehnung etwa kreisbogenförmig ist und an ihr ein ebenso kreisbogenförmig ausgebildeter Schild **(5)** angeordnet ist.

12. Rasengitterplatte nach einem oder mehreren der vorangegangenen Ansprüche, **dadurch gekennzeichnet,** daß die etwa spitz auslaufenden Enden einer Seitenwand **(12)** der Rasengitterplatte **(19; 19')** verstärkt sind und zur Verbindung mit einer benachbarten Rasengitterplatte **(19'; 19)** beide Rasengitterplatten **(19; 19')** miteinander korrespondierende Verschlußelemente aufweisen.

13. Rasengitterplatte nach einem oder mehreren der vorangegangenen Ansprüche, **dadurch gekennzeichnet,** daß die zur Begrenzung der Baumscheibe **(10)** vorgesehene Seite der etwa trapezförmigen Rasengitterplatte **(20)** in ihrer horizontalen Ausdehnung etwa kreisbogenförmig ist und an ihr ein ebenso kreisbogenförmig ausgebildeter Schild **(5)** angeordnet ist.

14. Rasengitterplatte nach einem oder mehreren der vorangegangenen Ansprüche, **dadurch gekennzeichnet,** daß der Schild **(5)** parallel zur Verlegeebene von Rasengitterplatten **(1; 7; 19; 20)** im horizontalen Schnitt gerade, kreisbogenförmig oder dreieckig ausgebildet ist.

15. Rasengitterplatte nach einem oder mehreren der vorangegangenen Ansprüche, **dadurch gekennzeichnet,** daß die Rasengitterplatten **(1; 7; 19; 20)** an ihren nicht mit einem Schild **(5)** versehenen Rändern mit Verschlußelementen für die Verbindung benachbarter Rasengitterplatten versehen sind.

16. Rasengitterplatte nach einem oder mehreren der vorangegangenen Ansprüche, **dadurch gekennzeichnet,** daß der Schild **(5)** außerhalb unmittelbarer Randbereiche der Rasengitterplatten **(1; 7; 19; 20)** etwa senkrecht unterhalb dieser angeordnet ist.

17. Rasengitterplatte nach einem oder mehreren der vorangegangenen Ansprüche, **dadurch gekennzeichnet,** daß die Rasengitterplatte **(7)** mit Schrägöffnung **(9)** ausgebildet ist und die Schrägöffnung **(9)** von etwa diagonal zu den Wabenwänden **(14)** verlaufenden Stützwänden **(18; 18')** gebildet ist.

18. Rasengitterplatte nach einem oder mehreren der vorangegangenen Ansprüche, **dadurch gekennzeichnet,** daß die Rasengitterplatten **(1; 7; 19; 20)** als einstückige Spritzgußteile aus Kunststoff hergestellt sind.
